# EUROPEAN PATENT SPECIFICATION

(11) **EP 3 656 583 B1**
(45) Date of publication and mention of the grant of the patent: **01.09.2021**
(21) Application number: 19209698.0
(22) Date of filing: 18.11.2019
(51) Int. Cl.: B60C 19/00, B60C 19/12

(54) **PNEUMATIC TIRE**
LUFTREIFEN
PNEUMATIQUE

(30) Priority: 20.11.2018 JP 2018217495
(43) Date of publication of application: 27.05.2020
(73) Proprietor: Sumitomo Rubber Industries, Ltd., Kobe-shi, Hyogo-ken 651-0072 (JP)
(72) Inventor: YUKAWA, Naoki, Kobe-shi Hyogo 651-0072 (JP)
(74) Representative: Manitz Finsterwald Patent- und Rechtsanwaltspartnerschaft mbB

(56) References cited:
- EP-A1- 3 199 382
- WO-A1-2017/163219
- DE-A1-102014 206 009
- US-A1- 2010 307 655

## Description

### BACKGROUND OF THE INVENTION

### Field of the Invention

The present invention relates to a pneumatic tire having a tread portion on which a sealant layer and a sound absorption layer are disposed.

### Description of the Background Art

Japanese Laid-Open Patent Publication (translation of PCT application) No. 2018-520928 discloses a pneumatic tire including, on the inner surface of a tread thereof, a sealant layer and a sound absorption member attached to the inner side in a tire radial direction of the sealant layer. The sealant layer serves to close a puncture hole in the tread. In addition, the sound absorption member allows reduction in road noise.

The above-described pneumatic tire has the following problem. When a foreign object pierces the tread and penetrates the sound absorption member, the sound absorption member is sometimes partially fractured. When the foreign object is pulled out from the tread, fragments (fracture pieces) of the fractured sound absorption member enter and remain in, together with a sealant material, the hole opened by the foreign object, and thus tend to reduce the puncture hole-closing effect of the sealant layer. In general, if such a phenomenon occurs, about 30 to 40% of the internal pressure of the tire is lost, and sufficient air-seal performance is not obtained.

In view of such a problem, the inventor attempted to sufficiently increase the thickness of a sound absorption member. The reason for this attempt is because increase in the thickness of the sound absorption member makes it less likely for foreign objects to penetrate the sound absorption member, resulting in suppression of partial fracture of the sound absorption member. However, the sound absorption member having a large thickness had the following tendencies: when a tread portion and/or the sound absorption member is deformed during running with the tire, side surfaces of the sound absorption member easily come into contact with a sealant layer, and from then on, is left adhering to the sealant layer. If such adhesion occurs, the thickness of the sound absorption member is reduced again (the sound absorption member is made flat). Therefore, the problem of inability to obtain sufficient air-seal performance still persisted.
DE 10 2014 206 009 A1 discloses a pneumatic tire comprising the features according to the preamble of claim 1.
WO 2017/163219 A1 discloses a pneumatic tire comprising the features according to the preamble of claim 2.

### SUMMARY OF THE INVENTION

The present invention has been made in view of the above-described circumstances, and a main object of the present invention is to provide a pneumatic tire capable of exhibiting sufficient air-seal performance while maintaining road noise performance.

The present invention is a pneumatic tire having a tread portion. On the tread portion, a sealant layer extending in a tire axial direction from a first end to a second end thereof, and a sound absorption layer adhered to an inner side in a tire radial direction of the sealant layer and formed of a sponge material, are disposed at a side where a tire inner cavity is present. The sealant layer is, at least at the first end side, uncovered with the sound absorption layer but provided with a first exposed portion exposed to the tire inner cavity and extending in the tire axial direction.

According to a first aspect, the sound absorption layer has, at a side where the first exposed portion is present, a first side surface which extends in the tire radial direction and at which the sound absorption layer has a thickness not less than 25 mm. The first side surface is provided with an adhesion prevention portion by which the first side surface and the first exposed portion are prevented from adhering to each other when coming into contact with each other owing to deformation of the sound absorption layer or the tread portion. In addition, the adhesion prevention portion is disposed over a range from an inner end in the tire radial direction of the first side surface to a position corresponding to not less than 20% of the thickness at the first side surface.

According to a second aspect, the sound absorption layer alternatively has, at a side where the first exposed portion is present, a first side surface which extends in the tire radial direction and at which the sound absorption layer has a thickness not less than 30 mm. The first exposed portion is provided with an adhesion prevention portion by which the first side surface and the first exposed portion are prevented from adhering to each other when coming into contact with each other owing to deformation of the sound absorption layer or the tread portion. In addition, a width in the tire axial direction of the first exposed portion is not greater than 15 mm.

In the pneumatic tire according to the present invention, the adhesion prevention portion is preferably disposed over a region within which a portion, of the first side surface, that extends over a range from an inner end in the tire radial direction of the first side surface to a position corresponding to not less than 20% of the thickness at the first side surface, comes into contact with the first exposed portion at the time of deformation owing to which the first side surface rotates to the first end side about an outer end in the tire radial direction of the first side surface and comes into contact with the first exposed portion.

In the pneumatic tire according to the present invention, the adhesion prevention portion includes a layer formed of a mold-release material.

Additionally or alternatively, the adhesion prevention portion includes a recessed and projecting portion which allows reduction in an area of contact between the first side surface and the first exposed portion.

In the pneumatic tire according to the first aspect of the present invention, the first exposed portion is preferably provided with an adhesion prevention portion by which the first side surface and the first exposed portion are prevented from adhering to each other when coming into contact with each other owing to deformation of the sound absorption layer or the tread portion.

In the pneumatic tire according to the first aspect of the present invention, the thickness of the sound absorption layer at the first side surface of the sound absorption layer is preferably not less than 30 mm, and a width in the tire axial direction of the first exposed portion is preferably not greater than 15 mm.

In the pneumatic tire according to the present invention, the first side surface of the sound absorption layer or the first exposed portion of the sealant layer includes the adhesion prevention portion by which the first side surface and the first exposed portion are prevented from adhering to each other when coming into contact with each other owing to deformation of the sound absorption layer or the tread portion. Such a pneumatic tire has the following advantageous effects. Even when various impacts or forces are exerted to the tread portion during running with the tire, adhesion between the first side surface of the sound absorption layer and the sealant layer is suppressed. As a result, the sound absorption layer is maintained to have a sufficient thickness, and thus foreign objects are less likely to penetrate the sound absorption layer, resulting in suppression of generation of fracture pieces and the like due to fracture of the sound absorption layer. Accordingly, the pneumatic tire according to the present invention suppresses entry of fracture pieces of the sound absorption layer into a hole that is to be sealed, and thus exhibits sufficient air-seal performance.

### BRIEF DESCRIPTION OF THE DRAWINGS

FIG. 1 is a tire meridian cross-sectional view of a pneumatic tire according to one embodiment of the present invention;
FIG. 2 is an enlarged view of a first end side in FIG. 1;
FIG. 3 is a perspective view of an adhesion prevention portion in another embodiment;
FIGS. 4(A) and (B) are enlarged views of a recessed and projecting portion in still another embodiment;
FIGS. 5(A) to (C) are enlarged views of a recessed and projecting portion in still another embodiment;
FIG. 6 is a cross-sectional view of the first end side in still another embodiment; and
FIG. 7 is a cross-sectional view of the first end side in still another embodiment.

### DESCRIPTION OF THE PREFERRED EMBODIMENTS

Hereinafter, one embodiment of the present invention will be described with reference to the drawings.

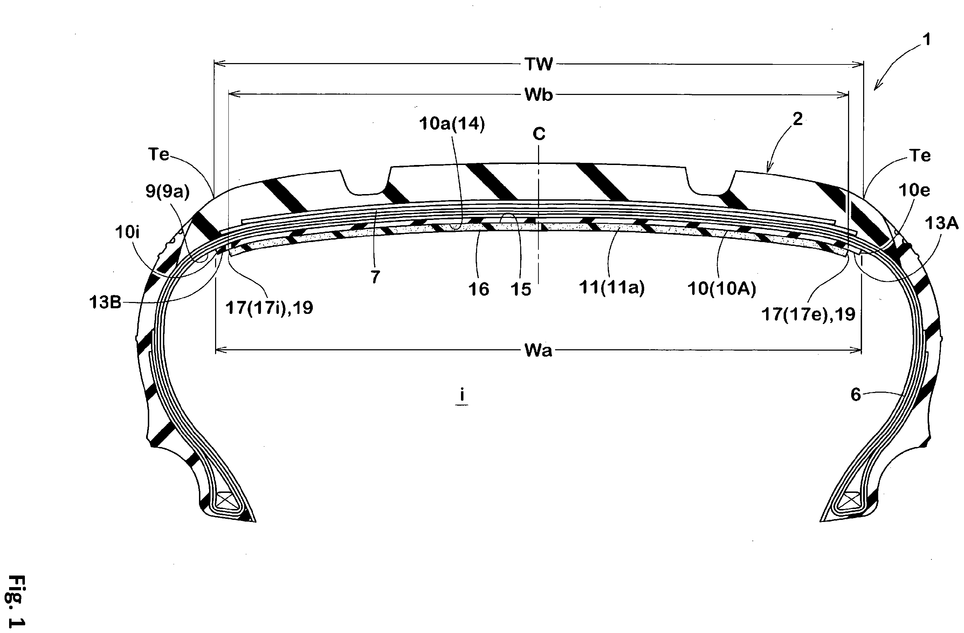

FIG. 1 is a tire meridian cross-sectional view of a pneumatic tire (hereinafter, sometimes referred to simply as "tire") 1 according to the embodiment of the present invention in a normal state. In the present embodiment, a pneumatic tire 1 for passenger cars is described as a preferable mode. However, the present invention may be implemented by, for example, a pneumatic tire 1 for two-wheeled automotive vehicles or a heavy-duty pneumatic tire 1.

The "normal state" refers to a state where the tire 1 is mounted to a normal rim (not shown) and inflated to a normal internal pressure, and no load is applied to the tire 1. Hereinafter, unless otherwise specified, the dimension and the like of each portion of the tire 1 are values measured in the normal state.

The "normal rim" refers to a rim that is defined, in a standard system including a standard on which the tire 1 is based, by the standard for each tire, and is, for example, the "Standard Rim" in the JATMA standard, the "Design Rim" in the TRA standard, or the "Measuring Rim" in the ETRTO standard.

The "normal internal pressure" refers to an air pressure that is defined, in a standard system including a standard on which the tire 1 is based, by the standard for each tire, and is the "maximum air pressure" in the JATMA standard, the maximum value indicated in the table "TIRE LOAD LIMITS AT VARIOUS COLD INFLATION PRESSURES" in the TRA standard, and the "INFLATION PRESSURE" in the ETRTO standard.

The tire 1 according to the present embodiment has therein tire components such as a carcass 6, a belt layer 7, and an inner liner 9 formed of an air-impermeable rubber material. Known types of components are used, as appropriate, as these tire components.

In the tire 1 according to the present embodiment, a sealant layer 10 and a sound absorption layer 11 which is formed of a sponge material 11a, are disposed, on a tread portion 2, at a side where a tire inner cavity i is present. The sealant layer 10 in the present embodiment is adhered to a surface 9a, of the inner liner 9, that faces inward in the tire radial direction. The sound absorption layer 11 in the present embodiment is adhered to the inner side in the tire radial direction of the sealant layer 10.

The sealant layer 10 is formed of a sealant material 10A having such a viscosity as to fill a hole that is to be formed owing to puncture. When a puncture hole is formed in the tread portion 2 by, for example, the tire treading over a nail during running, such a sealant layer 10 is deformed so as to close the hole, thereby inhibiting air leakage.

The sealant layer 10 in the present embodiment has a first end 10e (right side in FIG. 1) and a second end 10i (left side in FIG. 1) in the tire axial direction, and extends from the first end 10e to the second end 10i. The sealant layer 10 in the present embodiment continuously extends for one turn in the tire circumferential direction.

The sealant layer 10 is, at the first end 10e side, uncovered with the sound absorption layer 11 but provided with a first exposed portion 13A exposed to the tire inner cavity i and extending in the tire axial direction. The sealant layer 10 in the present embodiment is, also at the second end 10i side, uncovered with the sound absorption layer 11 but provided with a second exposed portion 13B exposed to the tire inner cavity i and extending in the tire axial direction. The sealant layer 10 further has a covered portion 14 covered with the sound absorption layer 11. The covered portion 14 in the present embodiment is disposed between the first exposed portion 13A and the second exposed portion 13B. The covered portion 14 continuously extends in the tire axial direction between the first exposed portion 13A and the second exposed portion 13B, for example. The first exposed portion 13A, the second exposed portion 13B, and the covered portion 14 in the present embodiment are formed on an inner surface 10a, of the sealant layer 10, that faces inward in the tire radial direction.

The width Wa in the tire axial direction of the sealant layer 10 is preferably 80% to 120% of a tread width TW. If the width Wa is within the range, puncture holes can be effectively closed over a wide range of the tread portion 2.

The "tread width TW" refers to a length in the tire axial direction between tread ends Te and Te which are ground-contact positions on both outermost sides in the tire axial direction in a state where a normal load is applied to the tire 1 in the normal state and the tire 1 is brought into contact with a flat surface at a camber angle of 0°

The "normal load" refers to a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The sound absorption layer 11 in the present embodiment has an outward facing surface 15 which faces the sealant layer 10 side, an inward facing surface 16 which is disposed on the side opposite to the outward facing surface 15 and faces inward in the tire radial direction, and a pair of side surfaces 17 which connect the outward facing surface 15 and the inward facing surface 16. That is, the sound absorption layer 11 has a substantially rectangular shape in a tire-meridian cross-sectional view. The outward facing surface 15 in the present embodiment is in contact with the sealant layer 10. The inward facing surface 16 in the present embodiment is exposed to the tire inner cavity i. The pair of side surfaces 17 include, for example, a first side surface 17e on the first end 10e side and a second side surface 17i on the second end 10i side.

Both the sealant layer 10 and the sound absorption layer 11 in the present embodiment are formed so as to be identical between the first end 10e side and the second end 10i side. Therefore, in the present specification, explanations made on the first end 10e side apply also to the second end 10i side. That is, elements formed on the first side surface 17e can be formed also on the second side surface 17i. Similarly, elements formed on the first exposed portion 13A can be formed also on the second exposed portion 13B. The only explanations made on the second end 10i side are differences from the first end 10e side.

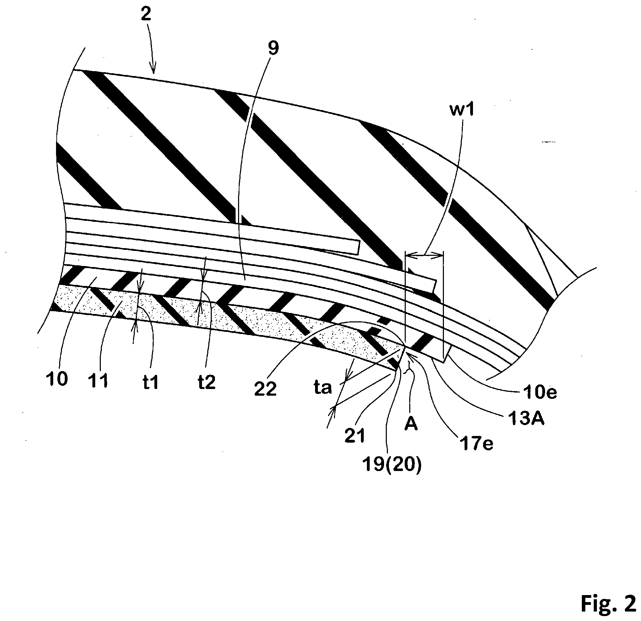

FIG. 2 is an enlarged view of the first end 10e side of the sealant layer 10 in FIG. 1. As shown in FIG. 2, the first side surface 17e at which the sound absorption layer 11 has a thickness ta that is, for example, not less than 25 mm extends in the tire radial direction. Since the sound absorption layer 11 in the present embodiment is formed in a substantially rectangular shape, the sound absorption layer 11 is preferably formed so as to have a thickness t1 not less than 25 mm over the entirety thereof extending in the tire axial direction.

The first side surface 17e includes an adhesion prevention portion 19 by which the first side surface 17e and the first exposed portion 13A are prevented from adhering to each other when coming into contact with each other owing to deformation of the sound absorption layer 11 or the tread portion 2. Such a tire 1 has the following advantageous effects. Even when various impacts or forces are exerted to the tread portion 2 during running with the tire, adhesion between the first side surface 17e of the sound absorption layer 11 and the sealant layer 10 is suppressed. As a result, the sound absorption layer 11 is inhibited from being made further flat and is maintained to have a sufficient thickness t1, and thus foreign objects are less likely to penetrate the sound absorption layer 11 to cause puncture, resulting in suppression of generation of fracture pieces (not shown) and the like due to fracture of the sound absorption layer 11. Accordingly, the tire 1 suppresses entry of fracture pieces of the sponge material 11a into a puncture hole that is to be sealed, and thus exhibits sufficient air-seal performance. In addition, since the thickness t1 of the sound absorption layer 11 is sufficiently ensured as described above, the sponge material 11a does not become excessively thin, whereby a sound absorption effect is ensured, and thus the road noise performance is maintained at a high level.

The thickness ta at the first side surface 17e is preferably not less than 30 mm in order for the above-described advantageous effects to be effectively exhibited. However, if the thickness ta is greater than 40 mm, although the effect of making foreign objects less likely to penetrate the sound absorption layer 11 reaches the highest level, the sound absorption layer 11 comes to have a lower rigidity, and thus may become easily fractured. Therefore, the thickness ta at the first side surface 17e is preferably not greater than 40 mm.

The adhesion prevention portion 19 only has to be disposed over a range A from an inner end 21 in the tire radial direction of the first side surface 17e to a position corresponding to not less than 20% of the thickness ta at the first side surface 17e. A portion, of the first side surface 17e, that extends over the range A is most likely to come into contact with the sealant layer 10 when the above-described impacts or forces are exerted. Therefore, since the adhesion prevention portion 19 is disposed over the range A, the adhesion prevention portion 19 is not excessively large but still allows air-seal performance to be exhibited.

The adhesion prevention portion 19 in the present embodiment includes, for example, a layer 20 formed of a mold-release material (not shown). The layer 20 formed of the mold-release material may be, for example, an application layer formed by applying the mold-release material onto the first side surface 17e. The application layer formed of the mold-release material is not particularly limited, and various layers such as a coated layer formed by means of a brush, a roller, a spray, or the like, and an impregnated layer formed through impregnation and the like can be used. Alternatively, the layer 20 may be, for example, a film layer formed of a film that contains silicone, polyethylene, or the like.

The thickness (not shown) of the layer 20 formed of the mold-release material described above is preferably made uniform. The thickness of the layer 20 is preferably about, for example, 5 to 100 µm. In the present specification, the thickness refers to a thickness after the mold-release material is dried.

Preferable examples of the mold-release material include silicone and polyethylene. The oil-type mold-release material (KF96) and the spray-type mold-release material (KF96SP) of the KF series manufactured by Shin-Etsu Chemical Co., Ltd., are particularly suitable as the mold-release material.

The sealant layer 10 is formed by, for example, continuously and helically applying and affixing the sealant material 10A having a substantially string-like shape onto the inner side in the tire radial direction of the inner liner 9 of the tire 1. In the present specification, the "substantially string-like shape" means such a shape as to have a length larger than the width and have certain degrees of width and thickness. It is noted that the forming method for the sealant layer 10 is not limited to this method, but various known forming methods can be employed.

The sealant material 10A is not particularly limited as long as having adhesiveness, and an ordinary rubber composition for sealing punctures in tires 1 can be used. As a rubber component which is a main component of such a rubber composition, butyl-based rubber is used, for example. Examples of the butyl-based rubber in the present embodiment include isobutylene-isoprene-rubber (IIR), and also halogenated isobutylene-isoprene-rubbers (X-IIR) such as brominated isobutylene-isoprene-rubber (Br-IIR) and chlorinated isobutylene-isoprene-rubber (Cl-IIR). Among these rubbers, one of or both of the isobutylene-isoprene-rubber and the halogenated isobutylene-isoprene-rubber are preferably used from the viewpoints of fluidity and the like.

A viscosity µ1 of the sealant material 10A is not particularly limited, but is preferably 15 to 40 kPa·s. If the viscosity µ1 is less than 15 kPa·s, the sealant material 10A flows to an area near the tire equator C on which the greatest centrifugal force is exerted, and thus may not flow into a puncture hole near either of the tread ends Te. Meanwhile, if the viscosity µ1 is greater than 40 kPa·s, the fluidity of the sealant material 10A deteriorates, and thus, also in this case, the sealant material 10A may not flow into a puncture hole. From the same viewpoint, a viscosity µ2 of the sealant material 10A is not particularly limited, but is preferably 1 to 10 kPa·s. The viscosity µ1 in the present specification is a value measured according to JIS K 6833 at 0°C with a rotational viscometer. Meanwhile, the viscosity µ2 in the present specification is a value measured according to JIS K 6833 at 100°C with a rotational viscometer.

The thickness t2 of the sealant layer 10 is, for example, preferably 1 to 10 mm and more preferably 1.5 to 5.0 mm. The thickness t2 of the sealant layer 10 is preferably substantially uniform. If the thickness t2 is substantially uniform, excellent air-seal performance and favorable fluidity can be exhibited in a well-balanced manner.

The width w1 in the tire axial direction of the first exposed portion 13A is preferably not greater than 15 mm. If the width w1 is not greater than 15 mm, the inner end 21 in the tire radial direction of the first side surface 17e of the sound absorption layer 11 becomes less likely to adhere to the first exposed portion 13A. Accordingly, adhesion between the first exposed portion 13A and the first side surface 17e is further likely to be prevented.

The sponge material 11a of the sound absorption layer 11 is formed of a porous substance in which numerous pores are formed. Preferable examples of the porous substance include sponges, polyester-based nonwoven fabrics, and polystyrene-based nonwoven fabrics. Preferable examples of the sponges include polyurethane sponges, and particularly preferable examples of the sponges include ether-based polyurethane sponges containing polyether polyols as raw materials and ester-based polyurethane sponges containing polyester polyols as raw materials. Alternatively, the sponge material 11a may be an ether-ester-based polyurethane sponge containing a polyester-polyether polyol as a raw material. Alternatively, the sponge material 11a may be a synthetic resin sponge such as a polyethylene sponge, a chloroprene rubber sponge (CR sponge), an ethylene-propylene rubber sponge (EPDM sponge), a nitrile rubber sponge (NBR sponge), or the like. Such a sponge material 11a maintains road noise performance at a high level.

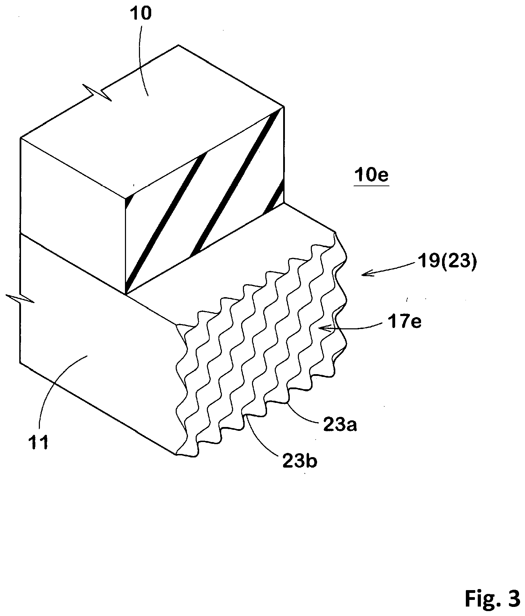

FIG. 3 is a perspective view of the adhesion prevention portion 19 on the first end 10e side in another embodiment. Components common to the above-described embodiment and the present embodiment are denoted by the same reference characters, and the description thereof will be omitted. The adhesion prevention portion 19 in the present embodiment is formed on the first side surface 17e of the sound absorption layer 11. The adhesion prevention portion 19 in the present embodiment is formed so as to include a recessed and projecting portion 23 which allows reduction in the area of contact between the first side surface 17e and the first exposed portion (not shown). Such a recessed and projecting portion 23 can also prevent adhesion between the first side surface 17e and the first exposed portion 13A.

The recessed and projecting portion 23 in the present embodiment is formed in an embossed pattern. The recessed and projecting portion 23 is formed by, for example, repetition of projecting portions 23a projecting outward in the tire axial direction and recessed portions 23b recessed inward in the tire axial direction. The projecting portions 23a in the present embodiment are formed in conical shapes. The recessed portions 23b in the present embodiment are formed in inverse conical shapes obtained by inverting the projecting portions 23a. The recessed and projecting portion 23 in the present embodiment is formed in a wavy shape in which the projecting portions 23a and the recessed portions 23b are continuous with each other.

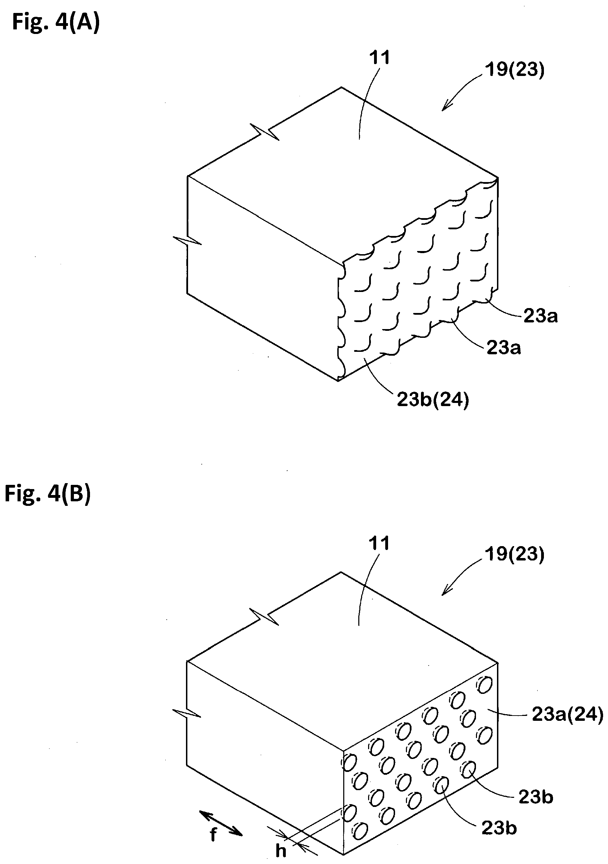

FIGS. 4(A) and (B) are enlarged views of a recessed and projecting portion 23 in still another embodiment. As shown in FIG. 4(A), the recessed and projecting portion 23 may be formed by a planarly extending flat surface portion 24 being dotted with the projecting portions 23a (in this case, the flat surface portion 24 corresponds to the recessed portions 23b). Alternatively, as shown in FIG. 4(B), the recessed and projecting portion 23 may be formed by the flat surface portion 24 being dotted with the recessed portions 23b having inverse conical shapes (in this case, the flat surface portion 24 corresponds to the projecting portions 23a).

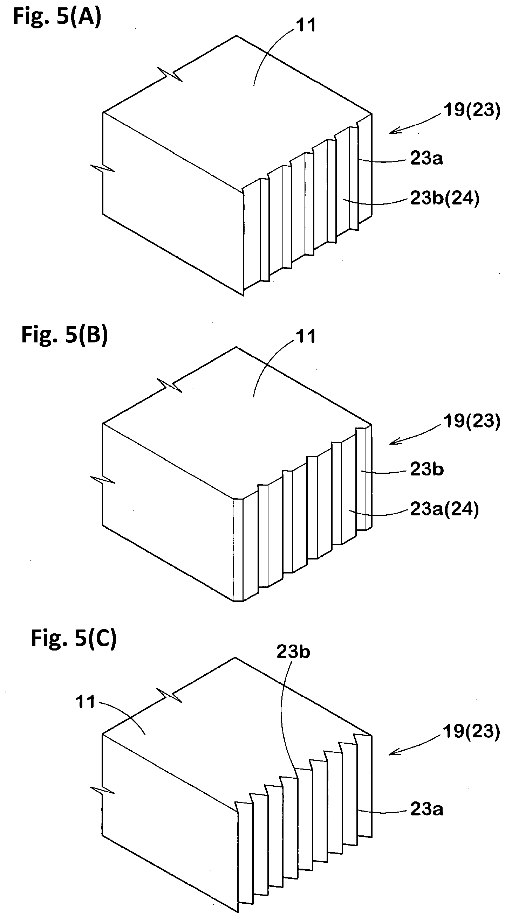

FIGS. 5(A) to (C) are enlarged views of a recessed and projecting portion 23 in still another embodiment. As shown in FIGS. 5(A) to (C), the recessed and projecting portion 23 in the present embodiment is formed into a rib-like body. Specifically, as shown in FIG. 5(A), the recessed and projecting portion 23 may be formed by arranging, on the flat surface portion 24, rib-like projecting portions 23a extending in the tire radial direction (in this case, the flat surface portion 24 corresponds to the recessed portions 23b). Alternatively, as shown in FIG. 5(B), the recessed and projecting portion 23 may be formed by arranging, in the flat surface portion 24, groove-like recessed portions 23b extending in the tire radial direction (in this case, the flat surface portion 24 corresponds to the projecting portions 23a). Still alternatively, as shown in FIG. 5(C), the recessed and projecting portion 23 may be formed by smooth repetition of the rib-like projecting portions 23a and the groove-like recessed portions 23b extending in the tire radial direction, without having the flat surface portion 24.

The recessed and projecting portion 23 is not limited to these forms, but may be obtained by, for example, alternately forming the projecting portions 23a on, and the recessed portions 23b in, the flat surface portion 24 (not shown). In addition, the shapes of the projecting portions 23a and the recessed portions 23b are not limited to the conical shapes and the rib shapes, but various shapes such as shapes of a column, a quadrangular prism, and a quadrangular pyramid can be used, for example. Furthermore, the first side surface 17e may include, as the adhesion prevention portion 19, the layer 20 formed of the mold-release material and the recessed and projecting portion 23 (not shown). As shown in FIG. 3, the height h of the recessed and projecting portion 23 is preferably 1 to 7 mm. The height h is the distance in the width direction f of the sound absorption layer 11 between each projecting portion 23a and the corresponding recessed portion 23b.

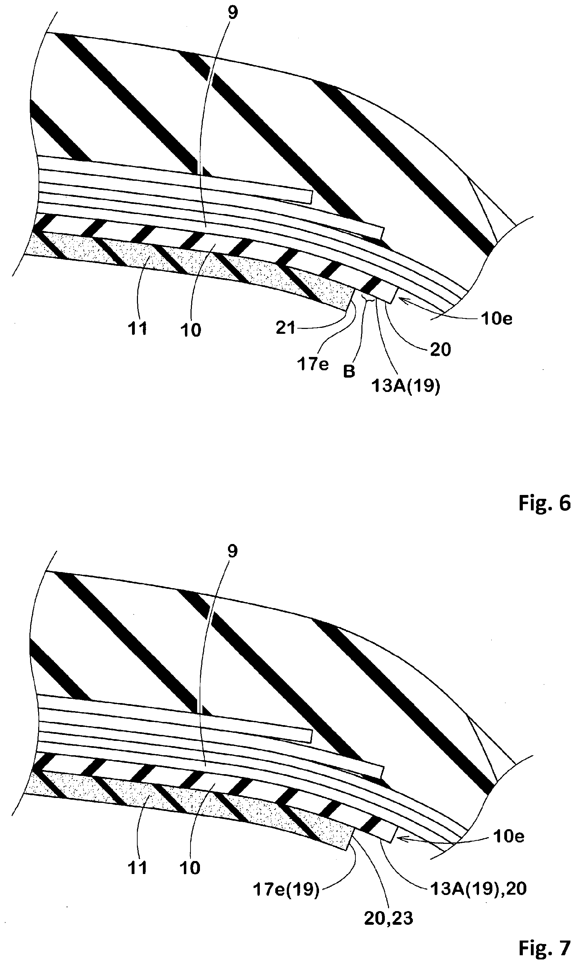

FIG. 6 is a cross-sectional view of the first end 10e side of the tire 1 in still another embodiment. Components common to the above-described embodiments and the present embodiment are denoted by the same reference characters, and the description thereof will be omitted. As shown in FIG. 6, the adhesion prevention portion 19 is disposed on the first exposed portion 13A in the present embodiment. Accordingly, adhesion with the first side surface 17e is prevented on the first exposed portion 13A side.

The adhesion prevention portion 19 in the present embodiment includes, for example, a layer 20 formed of a mold-release material. The layer 20 is formed by applying the mold-release material. The method for applying the mold-release material is not particularly limited, and various methods such as methods using a brush, a roller, and a spray can be employed. Alternatively, the layer 20 can be formed by, for example, a film that contains silicone, polyethylene, or the like. In addition, the adhesion prevention portion 19 may be formed by applying a material for reducing the adhesiveness of the sealant layer 10. Talc and the like are suitable as the material for reducing the adhesiveness. The layer 20 is preferably formed so as to have a uniform thickness, and preferably has a thickness of about, for example, 5 to 100 µm.

The adhesion prevention portion 19 only has to be disposed over a region B within which the portion, of the first side surface 17e, that extends over the range from the inner end 21 in the tire radial direction of the first side surface 17e to the position corresponding to not less than 20% of the thickness ta (shown in FIG. 3) at the first side surface 17e comes into contact with the first exposed portion 13A at the time of contact-involving deformation. The contact-involving deformation refers to deformation owing to which the first side surface 17e rotates to the first end 10e side about the outer end 22 in the tire radial direction of the first side surface 17e and comes into contact with the first exposed portion 13A.

FIG. 7 is a cross-sectional view of the first end 10e side of the tire 1 in still another embodiment. Components common to the above-described embodiments and the present embodiment are denoted by the same reference characters, and the description thereof will be omitted. As shown in FIG. 7, the adhesion prevention portion 19 is disposed on each of the first side surface 17e and the first exposed portion 13A in the present embodiment. Accordingly, the adhesion between the first side surface 17e and the first exposed portion 13A is more likely to be prevented, whereby excellent air-seal performance can be exhibited. The adhesion prevention portion 19 disposed on the first side surface 17e is preferably at least one of the layer 20 formed of the mold-release material and the recessed and projecting portion 23. The adhesion prevention portion 19 disposed on the first exposed portion 13A is preferably the layer 20 formed of the mold-release material.

Although the embodiments of the present invention have been described in detail above, the present invention is not limited to the illustrated embodiments, and it is needless to say that various modifications can be made to implement the present invention.

### EXAMPLES

Pneumatic tires having the basic structure in FIG. 1 were manufactured based on the specifications in Table 1, and each pneumatic tire was tested for air-seal performance. Specifications that are common to the tires, and a test method are described as follows.
Thickness t2 of sealant layer: 3 mm
Producing method for sealant layer: a method that involves affixing a substantially string-shaped sealant material using a twin-screw continuous kneader
Blending formula of sealant material (per 100 parts by mass of butyl rubber)
   - Liquid polybutene (HV-1900): 100 parts by mass
   - Liquid polybutene (HV-300): 100 parts by mass
   - Carbon black (N330): 50 parts by mass
   - Oil (DOS): 20 parts by mass
   - Crosslinking agent (BPO): 10 parts by mass
   - Crosslinking activator (p-benzoquinone oxime): 10 parts by mass Viscosity µ1 of sealant layer: 35 (kPa·s)
Mold-release material: KF96 or KF96SP manufactured by Shin-Etsu Chemical Co., Ltd.
Sponge material: an ether-based polyurethane sponge (specific gravity: 0.04)

The width Wb in the tire axial direction of the sound absorption layer is shown in FIG. 1.

### <Air-Seal Performance>

Running was performed with each tire on a drum having a diameter of 1.7 m under the following conditions. Then, 50 nails each having a body diameter of 5 mm were knocked into the tire so as to pierce a covered portion, and the nails were pulled out three minutes later. Thereafter, soapy water was sprayed on the tire, and a visual check was performed as to whether air leakage had occurred. The result is indicated as the number of locations at which air leakage had occurred. A smaller numeric value indicates better air-seal performance.
Tire size: 215/55R17
Rim: 17×7.5 J
Internal pressure: 250 kPa
Load: 4.6 kN
Running time: 1 hour
Speed: 200 km/h
Width Wa of sealant layer: 186 mm

Test results and the like are indicated in Table 1.

**[Table 1]**

| | Comparative Example 1 | Comparative Example 2 | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Width Wb of sound absorption layer (mm) | 80 | 80 | 80 | 80 | 80 | 80 | 80 | 80 | 80 | 80 | 80 | 80 |
| Thickness t1 of sound absorption layer (mm) | 20 | 30 | 30 | 35 | 40 | 35 | 35 | 35 | 35 | 35 | 35 | 35 |
| Presence/absence and type of adhesion prevention portion of sound absorption layer | Absent | Absent | Mold-release material (film) | Mold-release material (film) | Mold-release material (film) | Mold-release material (impregnation) | Mold-release material (brush) | Mold-release material (spray) | Mold-release material, recessed and projecting portion | Mold-release material (spray) | Mold-release material (spray) | Mold-release material (spray) |
| Height of adhesion prevention portion of sound absorption layer extending over range A/ta (%) | - | - | 100 | 100 | 100 | 100 | 100 | 100 | 100 | 15 | 20 | 50 |
| Presence/absence and type of adhesion prevention portion of sealant layer | Absent | Absent | Absent | Absent | Absent | Absent | Absent | Absent | Absent | Absent | Absent | Absent |
| Length of adhesion prevention portion of sealant layer extending over region B/ta (%) | - | - | - | - | - | - | - | - | - | - | - | - |
| Air-seal performance [Number of locations: a smaller numeric value indicates better air-seal performance.] | 15 | 12 | 4 | 3 | 3 | 3 | 3 | 3 | 3 | 5 | 4 | 3 |

| | Example 11 | Example 12 | Example 13 | Example 14 | Example 15 | Example 16 | Example 17 | Example 18 | Example 19 | | | |
|---|---|---|---|---|---|---|---|---|---|---|---|---|
| Width Wb of sound absorption layer (mm) | 80 | 80 | 80 | 80 | 80 | 80 | 166 | 156 | 146 | | | |
| Thickness t1 of sound absorption layer (mm) | 35 | 35 | 35 | 35 | 35 | 35 | 35 | 35 | 35 | | | |
| Presence/absence and type of adhesion prevention portion of sound absorption layer | Absent | Absent | Absent | Absent | Absent | Mold-release material (impre gnation) | Mold-release material (spray) | Mold-release material (spray) | Mold-release material (spray) | | | |
| Height of adhesion prevention portion of sound absorption layer extending over range A/ta (%) | - | - | - | - | - | 100 | 100 | 100 | 100 | | | |
| Presence/absence and type of adhesion prevention portion of sealant layer | Polyethylene film | Mold-release material (spray) | Mold-release material (brush) | Talc | Mold-release material (spray) | Polyethylene film | Absent | Absent | Absent | | | |
| Length of adhesion prevention portion of sealant layer extending over region B/ta (%) | 30 | 30 | 30 | 30 | 20 | 30 | - | - | - | | | |
| Air-seal performance [Number of locations: a smaller numeric value indicates better air-seal performance.] | 4 | 4 | 4 | 4 | 5 | 1 | 2 | 3 | 4 | | | |

As a result of the tests, it has been confirmed that the tire of each example has better air-seal performance than the tire of each comparative example. The same results were obtained even when the sound absorption layer, the scalant layer, the mold-release material, or the reessed and projecting portion were changed within the scope of the preferable mode. In addition, it is understood that the tire of the example maintains excellent road noise performance since the sound absorption layer is made less flat than in the tire of the comparative example.

## Claims

1. A pneumatic tire (1) having a tread portion (2), wherein
on the tread portion (2), a sealant layer (10) extending in a tire axial direction from a first end (10e) to a second end (10i) thereof, and a sound absorption layer (11) adhered to an inner side in a tire radial direction of the sealant layer (10) and formed of a sponge material (11a), are disposed at a side where a tire inner cavity (i) is present,
the sealant layer (10) is, at least at the first end (10e) side, uncovered with the sound absorption layer (11) but provided with a first exposed portion (13A) exposed to the tire inner cavity (i) and extending in the tire axial direction,
the sound absorption layer (11) has, at a side where the first exposed portion (13A) is present, a first side surface (17e) which extends in the tire radial direction and at which the sound absorption layer (11) has a thickness (ta) not less than 25 mm, and
the first side surface (17e) is provided with an adhesion prevention portion (19) by which the first side surface (17e) and the first exposed portion (13A) are prevented from adhering to each other, **characterized in that**
the adhesion prevention portion (19) is disposed over a range (A) from an inner end (21) in the tire radial direction of the first side surface (17e) to a position corresponding to not less than 20% of the thickness (ta) at the first side surface (17e),
wherein the adhesion prevention portion (19) includes a layer (20) formed of a mold-release material, and/or
wherein the adhesion prevention portion (19) includes a recessed and projecting portion (23) which allows reduction in an area of contact between the first side surface (17e) and the first exposed portion (13A).

2. A pneumatic tire (1) having a tread portion (2), wherein
on the tread portion (2), a sealant layer (10) extending in a tire axial direction from a first end (10e) to a second end (10i) thereof, and a sound absorption layer (11) adhered to an inner side in a tire radial direction of the sealant layer (10) and formed of a sponge material (11a), are disposed at a side where a tire inner cavity (i) is present,
the sealant layer (10) is, at least at the first end (10e) side, uncovered with the sound absorption layer (11) but provided with a first exposed portion (13A) exposed to the tire inner cavity (i) and extending in the tire axial direction,
the sound absorption layer (11) has, at a side where the first exposed portion (13A) is present, a first side surface (17e) which extends in the tire radial direction and at which the sound absorption layer (11) has a thickness (ta) not less than 30 mm, and
the first exposed portion (13A) is provided with an adhesion prevention portion (19) by which the first side surface (17e) and the first exposed portion (13A) are prevented from adhering to each other when coming into contact with each other owing to deformation of the sound absorption layer (11) or the tread portion (2),
**characterized in that**
a width (w1) in the tire axial direction of the first exposed portion (13A) is not greater than 15 mm,
wherein the adhesion prevention portion (19) includes a layer (20) formed of a mold-release material, and/or
wherein the adhesion prevention portion (19) includes a recessed and projecting portion (23) which allows reduction in an area of contact between the first side surface (17e) and the first exposed portion (13A).

3. The pneumatic tire (1) according to claim 1, wherein
the first exposed portion (13A) is provided with an adhesion prevention portion (19) by which the first side surface (17e) and the first exposed portion (13A) are prevented from adhering to each other when coming into contact with each other owing to deformation of the sound absorption layer (11) or the tread portion (2).

4. The pneumatic tire (1) according to claim 1 or 3, wherein
the thickness (ta) of the sound absorption layer (11) at the first side surface (17e) of the sound absorption layer (11) is not less than 30 mm, and
a width (w1) in the tire axial direction of the first exposed portion (13A) is not greater than 15 mm.

## Patentansprüche

1. Luftreifen (1) mit einem Laufflächenabschnitt (2), wobei
an dem Laufflächenabschnitt (2) eine Dichtungsschicht (10), die sich in einer Reifenaxialrichtung von einem ersten Ende (10e) bis zu einem zweiten Ende (10i) von dieser erstreckt, und eine Schallabsorptionsschicht (11), die in einer Reifenradialrichtung an einer Innenseite der Dichtungsschicht (10) anhaftet und aus einem Schwammmaterial (11a) gebildet ist, auf einer Seite angeordnet sind, auf der ein innerer Reifenhohlraum (i) vorhanden ist,
die Dichtungsschicht (10) zumindest auf einer Seite des ersten Endes (10e) nicht mit der Schallabsorptionsschicht (11) bedeckt ist, sondern mit einem ersten freiliegenden Abschnitt (13A) versehen ist, der zu dem inneren Reifenhohlraum (i) hin freiliegt und sich in der Reifenaxialrichtung erstreckt,
die Schallabsorptionsschicht (11) auf einer Seite, auf welcher der erste freiliegende Abschnitt (13A) vorhanden ist, eine erste Seitenfläche (17e) aufweist, die sich in der Reifenradialrichtung erstreckt und an der die Schallabsorptionsschicht (11) eine Dicke (ta) von nicht weniger als 25 mm aufweist, und
die erste Seitenfläche (17e) mit einem Adhäsionsverhinderungsabschnitt (19) versehen ist, durch den verhindert wird, dass die erste Seitenfläche (17e) und der erste freiliegende Abschnitt (13A) aneinander anhaften,
**dadurch gekennzeichnet, dass**
der Adhäsionsverhinderungsabschnitt (19) über einen Bereich (A) von einem inneren Ende (21) der ersten Seitenfläche (17e) in der Reifenradialrichtung bis zu einer Position angeordnet ist, die nicht weniger als 20% der Dicke (ta) an der ersten Seitenfläche (17e) entspricht,
wobei der Adhäsionsverhinderungsabschnitt (19) eine Schicht (20) aufweist, die aus einem Formtrennmaterial gebildet ist, und/oder
wobei der Adhäsionsverhinderungsabschnitt (19) einen Abschnitt (23) mit Aussparungen und Vorsprüngen aufweist, der eine Verkleinerung einer Kontaktfläche zwischen der ersten Seitenfläche (17e) und dem ersten freiliegenden Abschnitt (13A) ermöglicht.

2. Luftreifen (1) mit einem Laufflächenabschnitt (2), wobei
an dem Laufflächenabschnitt (2) eine Dichtungsschicht (10), die sich in einer Reifenaxialrichtung von einem ersten Ende (10e) bis zu einem zweiten Ende (10i) von dieser erstreckt, und eine Schallabsorptionsschicht (11), die in einer Reifenradialrichtung an einer Innenseite der Dichtungsschicht (10) anhaftet und aus einem Schwammmaterial (11a) gebildet ist, auf einer Seite angeordnet sind, auf der ein innerer Reifenhohlraum (i) vorhanden ist,
die Dichtungsschicht (10) zumindest auf einer Seite des ersten Endes (10e) nicht mit der Schallabsorptionsschicht (11) bedeckt ist, sondern mit einem ersten freiliegenden Abschnitt (13A) versehen ist, der zu dem inneren Reifenhohlraum (i) hin freiliegt und sich in der Reifenaxialrichtung erstreckt,
die Schallabsorptionsschicht (11) auf einer Seite, auf welcher der erste freiliegende Abschnitt (13A) vorhanden ist, eine erste Seitenfläche (17e) aufweist, die sich in der Reifenradialrichtung erstreckt und an der die Schallabsorptionsschicht (11) eine Dicke (ta) von nicht weniger als 30 mm aufweist, und
der erste freiliegende Abschnitt (13A) mit einem Adhäsionsverhinderungsabschnitt (19) versehen ist, durch den verhindert wird, dass die erste Seitenfläche (17e) und der erste freiliegende Abschnitt (13A) aneinander anhaften, wenn diese aufgrund einer Verformung der Schallabsorptionsschicht (11) oder des Laufflächenabschnitts (2) miteinander in Kontakt gelangen,
**dadurch gekennzeichnet, dass**
eine Breite (w1) des ersten freiliegenden Abschnitts (13A) in der Reifenaxialrichtung nicht größer als 15 mm ist,
wobei der Adhäsionsverhinderungsabschnitt (19) eine Schicht (20) aufweist, die aus einem Formtrennmaterial gebildet ist, und/oder
wobei der Adhäsionsverhinderungsabschnitt (19) einen Abschnitt (23) mit Aussparungen und Vorsprüngen aufweist, der eine Verkleinerung einer Kontaktfläche zwischen der ersten Seitenfläche (17e) und dem ersten freiliegenden Abschnitt (13A) ermöglicht.

3. Luftreifen (1) nach Anspruch 1, wobei
der erste freiliegende Abschnitt (13A) mit einem Adhäsionsverhinderungsabschnitt (19) versehen ist, durch den verhindert wird, dass die erste Seitenfläche (17e) und der erste freiliegende Abschnitt (13A) aneinander anhaften, wenn diese aufgrund einer Verformung der Schallabsorptionsschicht (11) oder des Laufflächenabschnitts (2) miteinander in Kontakt gelangen.

4. Luftreifen (1) nach Anspruch 1 oder 3, wobei
die Dicke (ta) der Schallabsorptionsschicht (11) an der ersten Seitenfläche (17e) der Schallabsorptionsschicht (11) nicht kleiner als 30 mm ist und
eine Breite (w1) des ersten freiliegenden Abschnitts (13A) in der Reifenaxialrichtung nicht größer als 15 mm ist.

## Revendications

1. Bandage pneumatique (1) ayant une portion formant bande de roulement (2), dans lequel
sur la portion formant bande de roulement (2), une couche d'étanchéité (10) s'étendant dans une direction axiale du pneumatique depuis une première extrémité (10e) jusqu'à une seconde extrémité (10i) de celle-ci, et une couche d'absorption de bruit (11) adhérée à un côté intérieur dans une direction radiale du pneumatique de la couche d'étanchéité (10) et formée d'un matériau spongieux (11a), sont disposées au niveau d'un côté où une cavité intérieure du pneumatique (i) est présente,
la couche d'étanchéité (10) est, au moins au niveau du côté de la première extrémité (10e), non recouverte de la couche d'absorption de bruit (11) mais dotée d'une première portion exposée (13A) exposée vers la cavité intérieure du pneumatique (i) et s'étendant dans la direction axiale du pneumatique,
la couche d'absorption de bruit (11) a, au niveau d'un côté où la première portion exposée (13A) est présente, une première surface latérale (17e) qui s'étend dans la direction radiale du pneumatique et au niveau de laquelle la couche d'absorption de bruit (11) a une épaisseur (ta) qui n'est pas inférieure à 25 mm, et
la première surface latérale (17e) est dotée d'une portion d'empêchement d'adhérence (19) au moyen de laquelle la première surface latérale (17e) et la première portion exposée (13A) sont empêchées d'adhérer l'une à l'autre,
**caractérisé en ce que**
la portion d'empêchement d'adhérence (19) est disposée sur une plage (A) depuis une extrémité intérieure (21) dans la direction radiale du pneumatique de la première surface latérale (17e) jusqu'à une position correspondant à pas moins de 20 % de l'épaisseur (ta) au niveau de la première surface latérale (17e),
dans lequel la portion d'empêchement d'adhérence (19) inclut une couche (20) formée d'un matériau de démoulage, et/ou
dans lequel la portion d'empêchement d'adhérence (19) inclut une portion évidée et en projection (23) qui permet une réduction dans une aire de contact entre la première surface latérale (17e) et la première portion exposée (13A).

2. Bandage pneumatique (1) ayant une portion formant bande de roulement (2), dans lequel
sur la portion formant bande de roulement (2), une couche d'étanchéité (10) s'étendant dans une direction axiale du pneumatique depuis une première extrémité (10e) jusqu'à une seconde extrémité (10i) de celle-ci, et une couche d'absorption de bruit (11) adhérée à un côté intérieur dans une direction radiale du pneumatique de la couche d'étanchéité (10) et formée d'un matériau spongieux (11a), sont disposées au niveau d'un côté où une cavité intérieure du pneumatique (i) est présente,
la couche d'étanchéité (10) est, au moins au niveau du côté de la première extrémité (10e), non recouverte de la couche d'absorption de bruit (11) mais dotée d'une première portion exposée (13A) exposée vers la cavité intérieure du pneumatique (i) et s'étendant dans la direction axiale du pneumatique,
la couche d'absorption de bruit (11) a, au niveau d'un côté où la première portion exposée (13A) est présente, une première surface latérale (17e) qui s'étend dans la direction radiale du pneumatique et au niveau de laquelle la couche d'absorption de bruit (11) a une épaisseur (ta) qui n'est pas inférieure à 30 mm, et
la première portion exposée (13A) est dotée d'une portion d'empêchement d'adhérence (19) au moyen de laquelle la première surface latérale (17e) et la première portion exposée (13A) sont empêchées d'adhérer l'une à l'autre quand elles viennent en contact l'une avec l'autre en raison d'une déformation de la couche d'absorption de bruit (11) ou de la portion formant bande de roulement (2),
**caractérisé en ce que**
une largeur (w1) dans la direction axiale du pneumatique de la première portion exposée (13A) n'est pas supérieure à 15 mm,
dans lequel la portion d'empêchement d'adhérence (19) inclut une couche (20) formée d'un matériau de démoulage, et/ou
dans lequel la portion d'empêchement d'adhérence (19) inclut une portion évidée et en projection (23) qui permet une réduction dans une aire de contact entre la première surface latérale (17e) et la première portion exposée (13A).

3. Bandage pneumatique (1) selon la revendication 1, dans lequel
la première portion exposée (13A) est dotée d'une portion d'empêchement d'adhérence (19) au moyen de laquelle la première surface latérale (17e) et la première portion exposée (13A) sont empêchées d'adhérer l'une à l'autre quand elles viennent en contact l'une avec l'autre en raison d'une déformation de la couche d'absorption de bruit (11) ou de la portion formant bande de roulement (2).

4. Bandage pneumatique (1) selon la revendication 1 ou 3, dans lequel
l'épaisseur (ta) de la couche d'absorption de bruit (11) au niveau de la première surface latérale (17e) de la couche d'absorption de bruit (11) n'est pas inférieure à 30 mm, et
une largeur (w1) dans la direction axiale du pneumatique de la première portion exposée (13A) n'est pas supérieure à 15 mm.
